# EUROPEAN PATENT SPECIFICATION

(11) **EP 2 778 865 B1**
(45) Date of publication and mention of the grant of the patent: **22.08.2018**
(21) Application number: 14159637.9
(22) Date of filing: 13.03.2014
(51) Int. Cl.: G06F 3/038, G06F 3/01

(54) **Input control method and electronic device supporting the same**
Eingangssteuerverfahren und elektronische Vorrichtung zur Unterstützung davon
Procédé de commande d'entrée et dispositif électronique le supportant

(30) Priority: 14.03.2013 KR 20130027584
(43) Date of publication of application: 17.09.2014
(73) Proprietor: Samsung Electronics Co., Ltd., Suwon-si Gyeonggi-do 443-742 (KR)
(72) Inventor: Kim, Jinyong, 443-742 Gyeonggi-do (KR)
(74) Representative: HGF Limited

(56) References cited:
- WO-A1-2008/113063
- US-B1- 6 779 060

## Description

### BACKROUND

### 1. Field of the Invention

The present invention generally relates to an input method to an electronic device, and more particularly, to a method of supporting improved input situation processing.

### 2. Description of the Related Art

Terminals typically support various new user inputs with the continuing development of hardware technology. In conventional terminals, however, the operation of various user inputs is greatly limited because only a specific input is allowed for a specific App (App) operation.

WO-2008/113063-A1 discloses a multi-modal human computer interface which receives a plurality of available information inputs concurrently, or serially, and employs a subset of the inputs to determine or infer user intent with respect to a communication or information goal. Received inputs are respectively parsed, and the parsed inputs are analyzed and optionally synthesized with respect to one or more of each other.

US-6,779,060-B1 discloses a multimodal user interface in which user inputs may be made in various different ways. It is disclosed that different inputs may be related and may have different significance.

### SUMMARY

The present invention has been made to address at least the above problems and to provide at least the advantages described below. Accordingly, an aspect of the present invention is to provide an input control method for improving user operability by performing further improved input situation processing and an electronic device supporting the same.

In accordance with a first aspect of the present invention, an input control method of an electronic device is provided. The method comprises: activating a plurality of input signal collection units supporting a multi-modal input; collecting at least one input signal from the input signal collection units; outputting feedback information corresponding to the at least one input signal; determining if the at least one input signal is mapped to a function of at least one foreground task; if the at least one input signal is mapped to a function of at least one foreground task, applying the at least one input signal to the at least one foreground task; and if the at least one input signal is not mapped to a function of at least one foreground task, applying the at least one input signal to at least one background task.

In accordance with a second aspect of the present invention, an electronic device is provided. The electronic device comprises a multi-modal input unit configured to comprise a plurality of input signal collection units supporting a multi-modal input, and a control unit. The control unit is configured to: activate the plurality of input signal collection units; collect at least one input signal from the input signal collection; output feedback information corresponding to the at least one input signal; determine if the at least one input signal is mapped to a function of at least one foreground task; if the at least one input signal is mapped to a function of at least one foreground task, apply the at least one input signal to the at least one foreground task; and if the at least one input signal is not mapped to a function of at least one foreground task, apply the at least one input signal to at least one background task.

Also disclosed is an electronic device which includes a multi-modal input unit configured to comprise a plurality of input signal collection units supporting a multi-modal input, and a control unit configured to activate the plurality of input signal collection units, to collect at least one input signal from the input signal collection, and to feedback information corresponding to the at least one input signal.

Also disclosed is an input control method which includes activating a plurality of input signal collection units supporting a multi-modal input, collecting at least one input signal from the input signal collection units, and outputting feedback information corresponding to the at least one input signal.

### BRIEF DESCRIPTION OF THE DRAWINGS

The foregoing and other aspects, features and advantages of the present invention will become more apparent from the following detailed description when taken in conjunction with the accompanying drawings in which:
FIG. 1 is a block diagram schematically showing the construction of an electronic device in accordance with an embodiment of the present invention;
FIG. 2 is a block diagram showing the detailed construction of a control unit shown in FIG. 1;
FIG. 3 is a flowchart illustrating a feedback providing method of a multi-modal input control method in accordance with an embodiment of the present invention;
FIG. 4 is a flowchart illustrating an execution processing method of the multi-modal input control method in accordance with an embodiment of the present invention;
FIG. 5 is a diagram illustrating an example of a screen interface for supporting a multi-modal input in accordance with an embodiment of the present invention; and
FIG. 6 is a diagram illustrating the execution of a time-based multi-modal input signal in accordance with an embodiment of the present invention.

### DETAILED DESCRIPTION OF EMBODIMENTS OF THE PRESENT INVENTION

Hereinafter, embodiments of the present invention are described in detail with reference to the accompanying drawings.

In describing the embodiments, a description of contents that are well known in the art to which the invention pertains and not directly related to the invention is omitted in order to make the gist of the invention clearer. Furthermore, a detailed description of elements that have substantially the same construction and function is omitted.

For the same reason, in the accompanying drawings, some elements are enlarged, omitted, or depicted schematically. Furthermore, the size of each element may not accurately reflect its real size. In the drawings, the same or similar elements are assigned the same reference numerals.

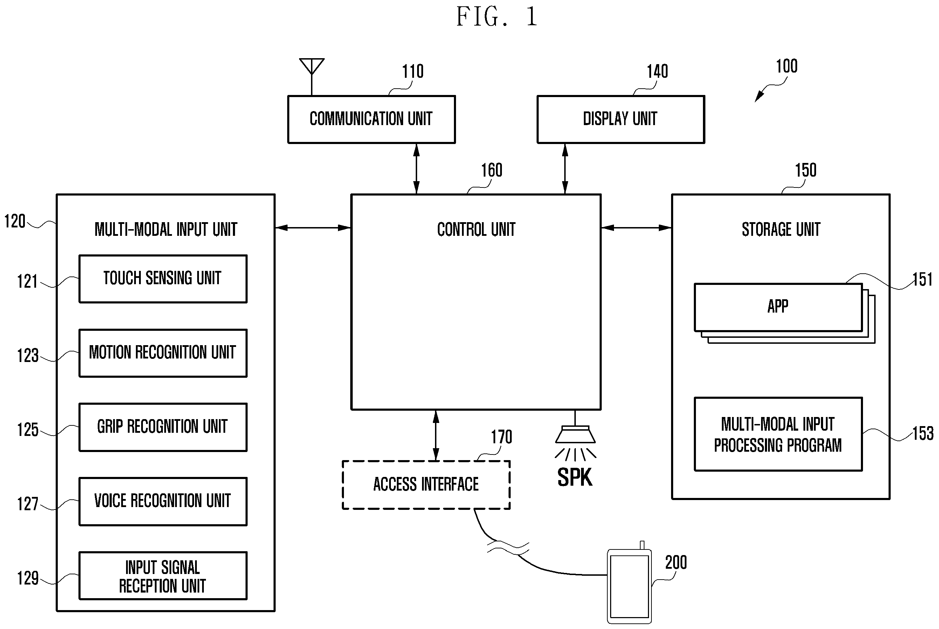

FIG. 1 is a block diagram schematically showing the construction of an electronic device in accordance with an embodiment of the present invention.

Referring to FIG. 1, the electronic device 100 of the present invention includes a communication unit 110, a multi-modal input unit 120, a display unit 140, a storage unit 150, and a control unit 160. The electronic device 100 further includes an access interface 170 for a connection with an external device 200. The electronic device 100 outputs various feedback outputs to be described later through the display unit 140, a speaker SPK, a vibration unit, a lamp unit and so on. The display unit 140 outputs the feedback information in the form of an indicator in a status bar region. The speaker SPK outputs the feedback information in the form of a sound effect or a voice guide sound. The vibration unit outputs the feedback information as haptic information corresponding to the vibration of a specific pattern. The lamp unit implements the feedback information by controlling a lamp having a specific form. The access interface 170 may also be used as an element for outputting a feedback to the external device 200.

The multi-modal input unit 120 includes various input signal collection units in order to support various types of inputs of the electronic device 100. For example, the multi-modal input unit 120 includes the input signal collection units, such as a touch sensing unit 121, a motion recognition unit 123, a grip recognition unit 125, a voice recognition unit 127, and an input signal reception unit 129.

The touch sensing unit 121 is configured to have a touch panel form and may be disposed on the display unit 140. Alternatively, the touch sensing unit 121 may be disposed on at least one side of a casing of the electronic device 100 and configured to sense a user touch and to provide a corresponding signal to the control unit 160. Furthermore, the touch sensing unit 121 can be configured to sense a touch using an electronic pen as well as a touch of a user. The touch sensing unit 121 for sensing a touch using an electronic pen can generate both a touch event according to access and a hovering event that is generated in a specific separation distance from the electronic pen.

The motion recognition unit 123 is configured to sense a user gesture. The motion recognition unit 123 includes at least one of various sensors, such as an image sensor, a proximity sensor, a gyro sensor, an acceleration sensor, a geomagnetic sensor, and a spatial gesture sensor. The motion recognition unit 123 collects various pieces of information, for example, image information, user gesture input information in space, proximity sensor signal information, acceleration information, angular velocity information, and direction information and performs specific motion recognition based on each of the various pieces of information. To this end, the electronic device 100 includes a database for image information recognition, motion mapping information mapped to a proximity sensor signal, and motion mapping information mapped to acceleration or angular velocity and direction information. The motion recognition unit 123 performs motion recognition based on the pieces of information. A motion signal recognized by the motion recognition unit 123 is provided to the control unit 160.

The grip recognition unit 125 is configured to recognize a grip state of the electronic device 100 or a state in which the electronic device 100 is pressed by a specific tool. The grip recognition unit 125 may be formed of at least one of various sensors, such as a piezoelectric sensor, a piezo sensor, a pressure sensor, and a SAW (Surface Acoustic Wave) sensor for grip recognition.

The voice recognition unit 127 includes a microphone and a voice recognition database capable of analyzing a collected acoustic signal. The voice recognition unit 127 is configured to analyze an acoustic signal, inputted by a user, based on the voice recognition database and to provide corresponding results. The voice recognition unit 127 provides voice recognition results to the control unit 160.

The input signal reception unit 129 is configured to receive input signals provided by the external device 200 through the communication unit 110 or the access interface 170. The input signal reception unit 129 directly transfers a received input signal to the control unit 160. In particular, the input signal reception unit 129 provides the control unit 160 with a received input signal including information regarding that the input signal has been received from a particular type of external device 200. In order to receive an input signal, the input signal reception unit 129 can include elements which are compatible with NFC, Bluetooth, Wi-Fi Direct, and a remote controller.

The multi-modal input unit 120 including the aforementioned elements can provide various input signals to the control unit 160. For example, the multi-modal input unit 120 can provide the control unit 160 with a touch event, a multi-touch event, a surface or palm touch event, a motion signal (e.g., a snap, a shake, a tilt, a tap, a double tap, rotation, or a pan), an air motion signal (e.g., a signal generated by recognizing a gesture that moves in space, such as a touchless-based tap, a sweep, circling, or wave), a hovering signal, a user hand shape signal, a pressure signal (e.g., a grip, a squeeze, or a glide poke), an acoustic signal (e.g., STT (Speech To Text) or a voice command signal), a face recognition signal (e.g., a face feeling signal or a face authentication signal), an eye-tracking signal, and a brainwave signal. The multi-modal input unit 120 can provide a single input signal to the control unit 160 or a plurality of input signals to the control unit 160 in response to a user input. Alternatively, a single input signal may be provided to the control unit 160 as a plurality of input signals along with another input signal that is undesirably generated in a process of being provided to the control unit 160. In this case, the electronic device 100 properly performs corresponding processing so that a user input is accurately performed according to the intention of a user. In the above description, the database may be part of the storage unit 150 and then provided to the multi-modal input unit 120. Alternatively, the database may be stored and managed in an additional storage region included in the multi-modal input unit 120.

The communication unit 110 is configured to support the communication function of the electronic device 100. The communication unit 110 supports a voice call function, a video call function, and a data communication function based on mobile communication. Furthermore, the communication unit 110 may be a Near-Field Communication (NFC) module or a Wi-Fi module. The operations of the communication unit 110 can be executed in response to at least one input signal generated from the multi-modal input unit 120. The communication unit 110 may be omitted if the electronic device 100 does not support an additional communication function.

The display unit 140 provides various screens related to the operations of the electronic device 100. For example, the display unit 140 can output a screen according to the execution of a specific function, such as a music playback function, a video playback function, or a broadcasting reception function. The display unit 140 may output a screen according to a specific function, such as a music playback function, only for a specific time and then shift to a turn-off state according to entry into a sleep state. Furthermore, the display unit 140 can remain in a turned-on state for a video playback period without shifting to a sleep state. The display unit 140 can provide input feedback information in response to at least one input signal provided by the multi-modal input unit 120. Furthermore, when an error in an input signal is generated, the display unit 140 can output an error feedback and a guide feedback for a normal signal input. Furthermore, the display unit 140 can provide a processing feedback in response to a specific input signal.

The storage unit 150 stores a multi-modal input processing program 153 for supporting a multi-modal input operation of the disclosure. Furthermore, the storage unit 150 stores at least one App 151 for supporting various user functions of the electronic device 100. The App 151 can be an application for supporting a specific user function, and can be activated in response to a request from a user or in response to set schedule information. An input signal generated from the multi-modal input unit 120 can be applied in a process of driving the App 151. In particular, in order to drive a specific App 151, at least some of input signals generated from the multi-modal input unit 120 can be provided. The App 151 can output a function screen to the foreground of the display unit 140 in an activation state. Alternatively, the App 151 may be driven in response to background processing without outputting a function screen to the display unit 140 in an activation state.

The multi-modal input processing program 153 includes a collection routine for collecting input signals generated from the multi-modal input unit 120, a feedback routine for providing a feedback in response to an input signal, a feedback routine for providing feedback for various situations generated in input signal processing processes, and a feedback routine for providing feedback according to input signal processing. The multi-modal input processing program 153 further includes a determination routine for determining that what type of an input signal will be provided to a particular App 151 in an input signal execution process. The multi-modal input processing program 153 can be loaded onto the control unit 160 and can be controlled in such a way as to activate at least some of the various elements that are included in the multi-modal input unit 120 in order to support a multi-modal input. The multi-modal input support function can be activated in response to a request from a user or can be activated by default. Elements activated in the multi-modal input support function may include at least some of the elements included in the multi-modal input unit 120 and may further include some elements to be activated for a multi-modal input in response to user designation.

The access interface 170 is configured to connect the external device 200 with the electronic device 100. The access interface 170 can support both a wired method and a wireless method. To this end, the access interface 170 can include wired serial connection interfaces, such as a USB interface and a UART interface. The access interface 170 can further include wireless connection interfaces, for example, a Bluetooth connection interface, a Zigbee connection interface, an Ultra Wide Band (UWB) connection interface, an RFID connection interface, an infrared connection interface, and a WAP (Wireless Application Protocol) connection interface.

The access interface 170 can include communication connection interfaces using various methods, which can be connected with the electronic device 100. The access interface 170 can be configured to include a plurality of ports and a plurality of wireless communication modules for connections with a plurality of external devices in addition to one external device 200. For example, the access interface 170 can support connections with a keyboard and a mouse and can also support connections with a wireless remote controller, smart TV, a smart monitor, a tablet computer, a personal computer (PC), and a note PC. The access interface 170 can provide an input signal from an external device to the control unit 160 or support the output of at least one of an image or text and audio information to be output to the external device 200 in a multi-modal input support process of the present invention.

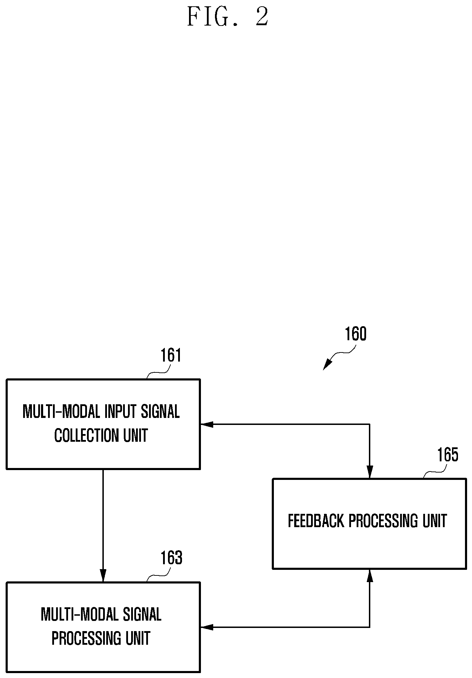

The control unit 160 is configured to control signal processing, data processing, the elements, and the transfer of signals between the elements for performing the multi-modal input support function of the disclosure. The control unit 160 can include elements, such as those shown in FIG. 2, for the multi-modal input function support.

FIG. 2 is a block diagram showing the detailed construction of the control unit 160 shown in FIG. 1.

Referring to FIG. 2, the control unit 160 of the present invention includes a multi-modal input signal collection unit 161, a feedback processing unit 165, and a multi-modal signal processing unit 163.

The multi-modal input signal collection unit 161 controls the activation of at least one element included in the multi-modal input unit 120. For example, when power is supplied to the electronic device 100, the multi-modal input signal collection unit 161 controls the multi-modal input unit 120 so that the multi-modal input unit 120 is activated by default. Furthermore, when a specific App driving request is generated, the multi-modal input signal collection unit 161 controls the multi-modal input unit 120 so that the multi-modal input unit 120 is activated. In such a process, the multi-modal input signal collection unit 161 can control the multi-modal input unit 120 so that only some of the elements of the multi-modal input unit 120 are activated when being powered and can control the multi-modal input unit 120 so that at least some of the remaining elements are activated when a specific App driving request is generated. For example, when the electronic device 100 is turned on, the multi-modal input signal collection unit 161 can control the multi-modal input unit 120 so that only the touch sensing unit 121 and the motion recognition unit 123 are activated. Furthermore, the multi-modal input signal collection unit 161 can control the multi-modal input unit 120 depending on the type of App that is activated so that at least one of the grip recognition unit 125, the voice recognition unit 127, and the input signal reception unit 129 is additionally activated. Alternatively, the multi-modal input signal collection unit 161 may control the multi-modal input unit 120 so that all the elements of the multi-modal input unit 120 are activated by default and may control the multi-modal input unit 120 so that an activation state of some elements of the multi-modal input unit 120 shifts to a non-activation state in response to a specific App driving request. For example, when a call function is driven, the multi-modal input signal collection unit 161 may control the multi-modal input unit 120 so that the voice recognition unit 127 is deactivated and the remaining elements of the multi-modal input unit 120 remain in an activation state.

The multi-modal input signal collection unit 161 collects specific input signals generated from elements of the multi-modal input unit 120, which are in an activation state, and provides the specific input signals to the multi-modal signal processing unit 163 and the feedback processing unit 165. The multi-modal input signal collection unit 161 collects a signal generated from at least one element of the multi-modal input unit 120. For example, the multi-modal input signal collection unit 161 can collect a touch event, a multi-touch event, a surface touch event, a motion signal, an air motion signal (i.e., a signal generated by recognizing a gesture that moves in space), a hovering signal, a user hand shape signal, a grip signal, a squeeze signal, an acoustic signal, a face recognition signal, an eye-tracking signal, and a brainwave signal.

When a specific input signal is received from the multi-modal input signal collection unit 161, the feedback processing unit 165 outputs information corresponding to the type of specific input signal. For example, the feedback processing unit 165 can support an operation for outputting at least one of an icon or a specific image, text information, and a vibration pattern corresponding to the type of input signal that is received from the multi-modal input signal collection unit 161. Accordingly, the feedback processing unit 165 can support a user so that the user can easily check that a current input signal generated as a multi-modal input signal corresponds to a particular type of an input signal. For example, when a voice recognition signal is received, the feedback processing unit 165 may output an icon indicative of ongoing voice recognition to a status bar region or an indicator region in the form of a specific indicator or may output the icon in the form of a pop-up message. When a motion recognition signal is received, the feedback processing unit 165 can output an indicator or a specific icon, corresponding to the received motion recognition signal, to one side of the display unit 140. Here, the feedback processing unit 165 can output information corresponding to the motion recognition signal in various forms. That is, the feedback processing unit 165 can support information about an input signal so that the information is displayed in graphics depending on the type of input signal in real time. Furthermore, the feedback processing unit 165 can provide information depending on the type of input signal in the form of an acoustic signal, a haptic signal, such as vibration, a change of LED brightness, or a change of color. Furthermore, the feedback processing unit 165 may output information related to an input signal to the external device 200 that is connected with the electronic device 100 or may perform feedback mirroring on the output information.

The feedback processing unit 165 supports a user so that the user can obtain information about an input signal more adaptively, intuitively, or easily depending on the type of input signal in a feedback providing process. For example, the feedback processing unit 165 can output information, corresponding to an input signal, in the form of visual gradation in relation to the input signal corresponding to a situation through which a user can view a screen or to a basic situation. In such a process, a touch, a multi-touch, or a surface touch can become the input signal. Furthermore, the feedback processing unit 165 can output information about the collection of an input signal in the form of a specific audio signal in response to the input signal, such as a motion signal, an air motion signal, or an acoustic signal on which a screen cannot be viewed or that does not have a physical contact. To this end, the electronic device 100 can previously store audio information corresponding to the information about the input signal. The feedback processing unit 165 can output information about an input signal as haptic information in a situation where a screen cannot be viewed and in a silent mode setting situation. For example, the feedback processing unit 165 can control the haptic output having a specific pattern so that the haptic pattern is output in response to the collection of information about an input signal, such as a touch, a grip, a squeeze, or a motion. In order to support an intuitive method for enabling the electronic device to receive a user input and display a state, the feedback processing unit 165 can provide a change of LED output corresponding to the collection of information, such as an acoustic signal, an air motion signal, a face recognition signal, or a brainwave signal. Furthermore, the feedback processing unit 165 can support an N screen method in response to a movement of the electronic device 100 or the collection of an input signal, for example, an acoustic signal or an air motion signal that operates in conjunction with the external device 200 (i.e., a method of outputting information about the collection of an input signal to the external device 200).

The feedback processing unit 165 can also support feedback information regarding input signal processing so that the feedback information is output. The feedback processing unit 165 can also support feedback information regarding signal processing according to a corresponding method depending on the type of input signal.

The multi-modal signal processing unit 163 can be configured to perform processing in response to an input signal that is collected and provided by the multi-modal input signal collection unit 161. For example, when receiving a multi-modal input signal while driving a specific App, the multi-modal signal processing unit 163 can perform an App function by applying the multi-modal input signal to the specific App and provide a change of a corresponding screen. Here, the multi-modal signal processing unit 163 can adaptively process corresponding input signals according to the execution principles of the input signals.

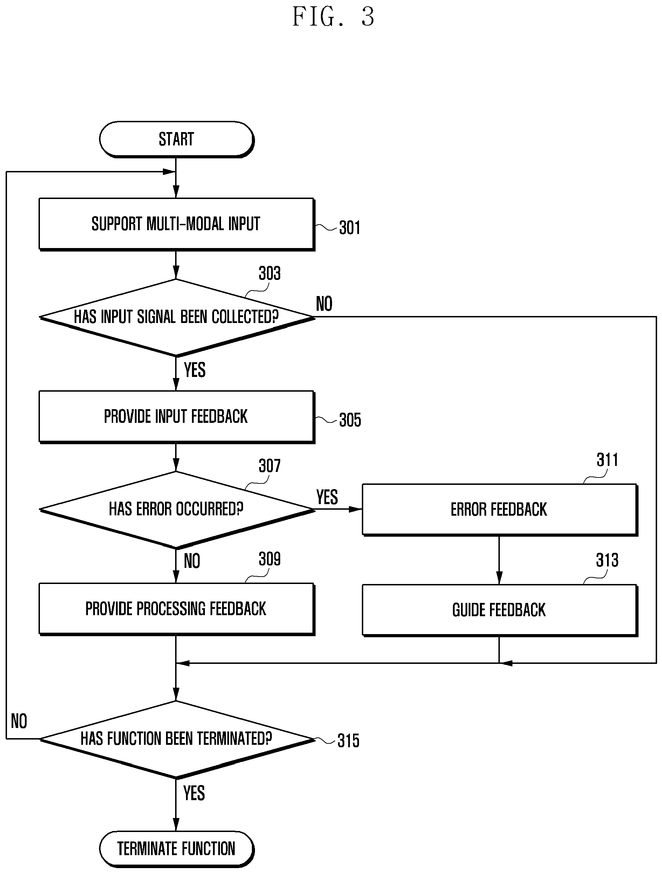

FIG. 3 is a flowchart illustrating a feedback providing method of a multi-modal input control method in accordance with an embodiment of the present invention.

Referring to FIG. 3, the control unit 160 of the present invention performs an operation for supporting a multi-modal input at step 301. For example, the control unit 160 can perform a power supply and initialization process for at least one element of the multi-modal input unit 120 or support the maintenance of already activated elements.

Next, the control unit 160 determines whether or not an input signal has been generated from the multi-modal input unit 120 at step 303. If, as a result of the determination, an input signal is found to have been generated from the multi-modal input unit 120, the control unit 160 proceeds to step 305 where the control unit 160 provides an input feedback. At step 305, the control unit 160 checks the type of input signal and controls the output of feedback information according to at least one of a visual method, a voice method, a haptic method, an LED method, and an output method of the external device 200 depending on the type of input signal. In order to output the feedback information, the electronic device 100 can previously store information about an image, audio, a vibration pattern, or an LED control pattern corresponding to the feedback information.

Next, the control unit 160 proceeds to step 307 where the control unit 160 determines whether an error in the input signal has occurred. That is, the control unit 160 determines whether an input signal generated from an element of the multi-modal input unit 120 for the collection of a specific input signal is a normally generated input signal. In such a process, if an error is found not to be included in the collected input signal, the control unit 160 proceeds to step 309 where the control unit 160 processes the input signal and provides a corresponding processing feedback. For example, the control unit 160 can apply a specific input signal to the driving of a specific App and perform control so that an image, text, voice, the adjustment of an LED lamp, or haptic pattern on which the application of the specific input signal to the specific App can be recognized is output.

At step 307, the control unit 160 determines recognition according to a touch using a predetermined and erroneous method, recognition according to a predetermined and erroneous motion signal, or recognition according to a predetermined and erroneous voice input to be the generation of an error. In this case, the control unit 160 proceeds to step 311 at which the control unit 160 outputs an error feedback. That is, the control unit 160 can output an error feedback output that announces that the collection of the input signal was erroneous. Various types of error feedback can be output depending on the type of input signal. For example, the error feedback can be implemented in the form of visual gradation, an acoustic signal, haptic information, LED control, or information output to a specific external device 200.

Furthermore, the control unit 160 outputs a guide feedback at step 313. The guide feedback can include guide information that announces the generation of a valid input signal in the driving of a current App. For example, the guide feedback can include a specific animation, text information, image information, or audio information that describes the generation of an input signal for executing a specific operation.

Next, the control unit 160 proceeds to step 315 at which the control unit 160 determines whether an input signal for terminating the multi-modal input support function has been generated and controls a corresponding operation. If, as a result of the determination, an input signal for terminating the multi-modal input support function is found not to have been generated, the control unit 160 returns to step 301 and performs the subsequent processes again.

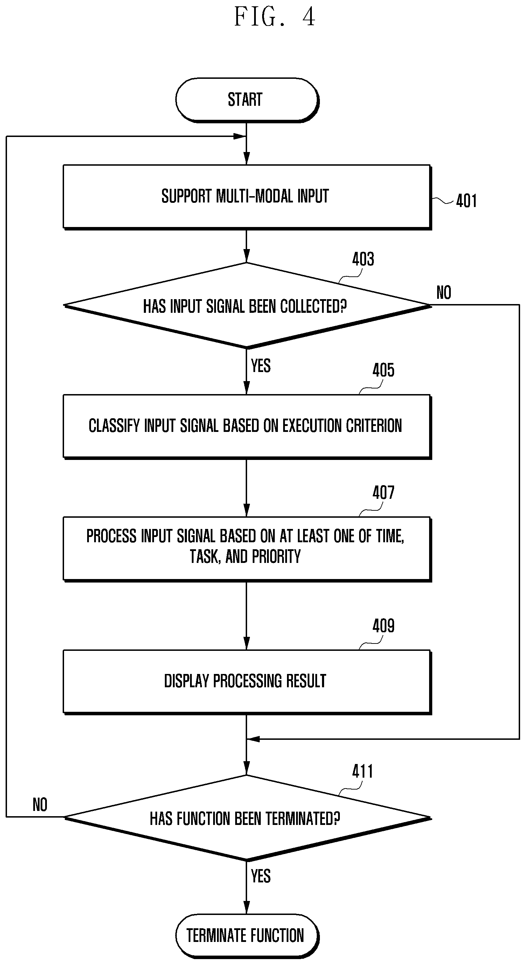

FIG. 4 is a flowchart illustrating an execution processing method of the multi-modal input control method in accordance with an embodiment of the present invention.

Referring to FIG. 4, the control unit 160 of the present invention performs multi-modal input support at step 401. Step 401 is performed similar to step 301 of FIG. 3. Next, the control unit 160 determines whether an input signal has been collected at step 403. If, as a result of the determination, an input signal is found to have been generated in the multi-modal input situation, the control unit 160 proceeds to step 405 where the control unit 160 checks an execution criterion for the input signal and classifies the input signal according to the execution criterion. In such a process, the control unit 160 can wait until a point of time at which input for collected input signals is completed or terminated and collect input signals received until the point of time as one input signal. Alternatively, the control unit 160 may collect a specific input signal from a point of time at which input for the specific input signal is started. If the input signal has not been collected at step 403, the control unit 160 proceeds, to step 411 to determine if an input signal for terminating the multi-model input support function has been generated and if so, the process ends.

The execution criterion and classification for input signals can include a process of checking the type of currently activated App and classifying valid input signals which can be applied to the activated App. When the classification of the input signal is completed in step 405, the control unit 160 proceeds to step 407 where the control unit 160 processes the input signal based on at least one of time, a task, and priority. For example, if the input signal is to be processed based on time, when a plurality of input signals is generated, the control unit 160 processes the plurality of input signals in such a way as to first process first received input signals on the basis of a point of time at which each input signal is received. Furthermore, if the input signal is to be processed based on a task, the control unit 160 controls the application of the input signal depending on forms in which Apps are executed. For example, the control unit 160 can control the input signal so that the input signal is applied to at least one of a plurality of currently activated Apps. Here, the control unit 160 may differently apply the input signal depending on a task for each App. Furthermore, if the input signal is to be processed based on priority, the control unit 160 provides the input signal to an App, but may provide the input signal to the App according to priority predetermined in each App. The priority predetermined in each App may vary depending on characteristics unique to the App or a design method. Alternatively, the priority predetermined in each App may vary depending on user designation.

Furthermore, unique priority can be designated between multi-modal input signals or input signal collection units included in the multi-modal input unit 120. The unique priority can be a criterion on which input signal will be first processed, or which input signal will be processed as a valid signal and which input signal will be neglected when a plurality of input signals is generated almost at the same time. The unique priority may be directly assigned by a user or may be previously assigned according to each input signal collection unit based on the accuracy of a manipulation (i.e., the recognition accuracy of input) in a system that includes an electronic device or another external device connected with the electronic device. Accordingly, when a plurality of input signals is received, the control unit 160 can apply only at least one input signal to the App function according to priorities assigned to the plurality of input signals on the basis of priorities assigned to the input signal collection units or priorities assigned by user designation.

For example, if a collision (i.e., redundant recognition) is generated in the manipulation between a method of an input signal collection unit generating one input signal and a method of generating the other input signal, the control unit 160 can support systematic processing on which an input signal having higher priority on the basis of the priorities is determined to be valid and an input signal having lower priority on the basis of the priorities is neglected. For example, it is assumed that the accuracy of manipulation recognition using a touch input method is designed to be higher than the accuracy of spatial gesture recognition and an input signal using the touch input method has higher priority. In this case, two types of multi-modal inputs including a spatial gesture input signal and a touch input signal may be generated simultaneously because a track for a movement of an arm of a user can move over a gesture sensor (e.g., a proximity sensor) for sensing a gesture input in space while the user performs a touch manipulation. In this case, the control unit 160 neglects the spatial gesture input (i.e., input unwanted by the user) until the touch input is completed. In order to support such a function, the control unit 160 neglects previously collected spatial gesture inputs if a spatial gesture input is generated and a touch input is then generated after a lapse of a specific time. Furthermore, the control unit 160 can neglect a spatial gesture input that is generated within a specific time after a touch input is generated. The control unit 160 can recognize a specific spatial gesture input as a spatial gesture if the specific spatial gesture input is started as a spatial gesture input and then completed as a spatial gesture input.

Next, the control unit 160 controls the processing results so that the processing results are output at step 409. For example, the control unit 160 controls a function screen of a specific App so that the function screen is updated and displayed if the input signal is applied to the specific App. Furthermore, the control unit 160 can change data to be applied to a specific App if the data is applied to the specific App.

Next, the control unit 160 determines whether an input signal for terminating the multi-modal input support function has been generated at step 411. If, as a result of the determination, an input signal for terminating the multi-modal input support function is found not to have been generated, the control unit 160 returns to step 401 where the control unit 160 performs the subsequent processes.

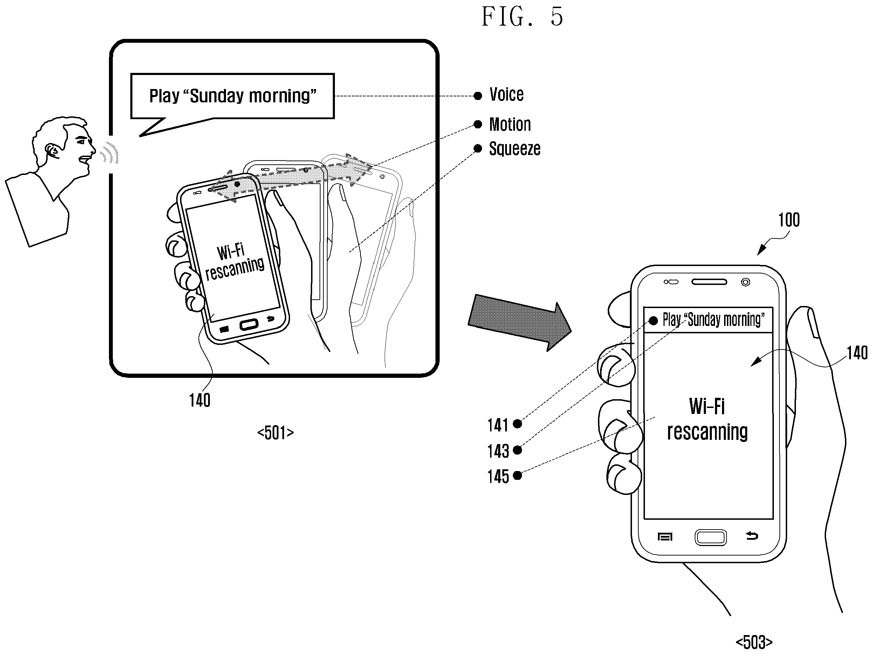

FIG. 5 is a diagram illustrating an example of a screen interface for supporting a multi-modal input in accordance with an embodiment of the present invention.

Referring to FIG. 5, when driving the electronic device 100 as in a state 501, a user fetches a voice agent corresponding to the voice recognition unit 127 through a squeeze operation while a Wi-Fi state is rescanned and can request specific music, for example, Background Music (BGM) to be executed based on the voice agent. To this end, the electronic device 100 includes a Wi-Fi module and performs an operation for rescanning the Wi-Fi module in response to a shake operation of the user. Furthermore, the electronic device 100 can activate a microphone while activating the voice recognition unit 127 and receive an acoustic signal from the user. Also, the electronic device 100 can activate the grip recognition unit 125 and collect input signals according to the squeeze operation. As a result, in the state 501, the electronic device 100 can collect input signals through the voice recognition unit 127, the grip recognition unit 125, and the motion recognition unit 123. To this end, the electronic device 100 can control a plurality of input signal collection units included in the multi-modal input unit 120 so that all the input signal collection units are activated, or only the voice recognition unit 127, the grip recognition unit 125, and the motion recognition unit 123 are activated. In particular, when an App based on the Wi-Fi module is activated, the electronic device 100 can control input signal collection units including the voice recognition unit 127, the grip recognition unit 125, and the motion recognition unit 123 so that the input signal collection units are activated. In such a process, the display unit 140 can output information about a screen related to the rescanning process of the Wi-Fi module.

When the collection of the input signals is collected, the electronic device 100 supports the output of feedback information according to the collected input signals as in a state 503. More particularly, the electronic device 100 can output acoustic feedback information 141 announcing that the acoustic signal has been collected from the voice recognition unit 127, voice processing feedback information 143 according to the processing of the acoustic signal, and motion signal collection or motion signal processing feedback information 145 that reflects the rescanning process of the Wi-Fi module corresponding to a current task the display unit 140.

While performing the aforementioned operation, the electronic device 100 performs a complex process of performing a specific operation of the Wi-Fi module in response to the motion signal (i.e., a shake signal) collected by the motion recognition unit 123, activating the voice recognition unit 127 in response to the input signal (i.e., a squeeze signal) collected by the grip recognition unit 125, and then performing a music playback function by performing voice recognition. As described above, the electronic device 100 of the disclosure collects input signals while simultaneously activating some of input signal collection units included in the multi-modal input unit 120 or while activating some input signal collection units by associating the input signal collection units with each other in response to the execution of a specific function, and executes a specific App in response to the collected input signals in a complex way. Accordingly, the electronic device of the present invention can support a user so that the user activates a specific App and controls the operation of the specific App while performing a specific function.

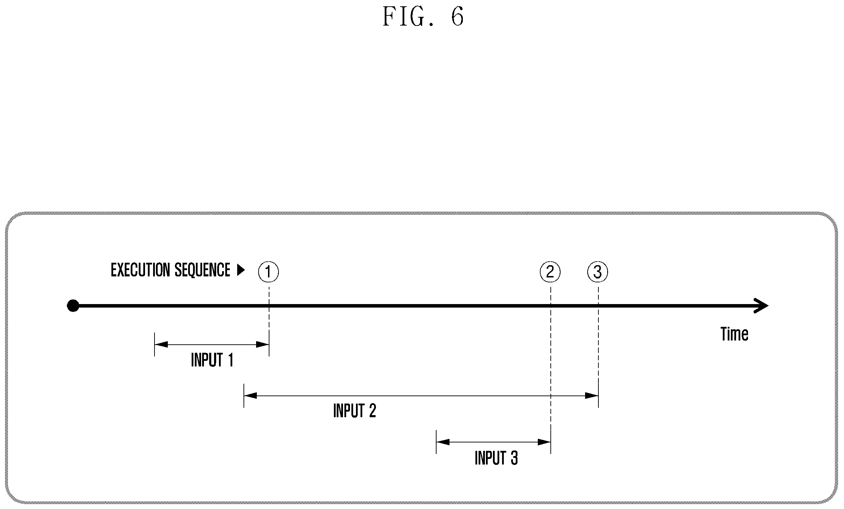

FIG. 6 is a diagram illustrating the execution of a time-based multi-modal input signal of the present invention.

Referring to FIG. 6, the control unit 160 of the electronic device 100 activates a plurality of input signal collection units included in the multi-modal input unit 120. Furthermore, the control unit 160 supports processing so that the processing is performed in order on the basis of a point of time at which the reception of input signals from input signal collection units is completed in a process of applying the input signals to at least one App. For example, as shown in FIG. 6, an input 2 may be executed while an input 1 is being generated, and an input 3 may be terminated while the input 2 is being executed. In this case, the control unit 160 determines the processing sequence of the input 1 to be the first, determines the processing sequence of the input 3 to be the second, and determines the processing sequence of the input 2 to be the third.

Assuming that the input 1 is an input signal to request an E-book App to be executed in response to a touch input, the input 2 is an input signal to request a message to be transmitted through the voice recognition unit 127, and the input signal 3 is an input signal to request to immediately move to a bookmark point in response to an air motion, the control unit 160 first executes the E-book App and then moves to the bookmark point of the E-book in response to the input 3 while activating the voice recognition unit 127 and collecting an acoustic signal at the same time. Furthermore, when the input 2 is completed, the control unit 160 controls a message including text voice-recognized through background processing so that the message is transmitted to a designated user or a user extracted from voice-recognized information. In such a process, the control unit 160 can provide a check procedure for enabling the user to check the message prior to the transmission of the message.

Examples of the input support function of the disclosure are described in more detail below.

The input support function of the disclosure provides various types of input interface methods through input signal collection units included in the multi-modal input unit 120. In such a process, the electronic device 100 of the present invention supports a state that is being used by a user so that the state is displayed. For example, the electronic device 100 can provide the activation state of the voice recognition unit 127 so that voice is received while browsing a web. Here, the electronic device 100 can display an indicator related to the microphone in a status bar region (or an indicator region). Furthermore, the electronic device 100 can support the display of an indicator having a hand/gesture shape in the status bar region while receiving an air motion so that a user can intuitively recognize what type of input is collected during the multi-modal input. Furthermore, the electronic device 100 can support the display of a recognition progress in response to input in the form of an LED lightening effect or of visual gradation corresponding to the background of the status bar region, while recognizing a face or performing an Optical Character Reader (OCR) function.

If a user enters a command for an App (e.g., a task or a specific domain) being processed, the electronic device 100 may not provide an additional feedback to the results of the command. If the targets of simultaneously received input signals correspond to a multi-tasking situation for different Apps, the electronic device 100 may not provide a feedback to the results of input for a task that is being displayed on a screen, but can support the supply of the background or a result feedback using a proper method that has been described above depending on the type of input signal in relation to a command executed in the external device 200.

If the targets of simultaneously received input signals correspond to a multi-tasking situation for the same App, the electronic device 100 can provide a procedure for displaying a list of all the received input signals so that a user can check the list. For example, the electronic device 100 can display a list of input signals as a pop-up or a ticker. Here, the electronic device 100 classifies input signals that collide against each other while receiving the input signals and displays the classified input signals. Furthermore, the electronic device 100 can support a user so that the user can control the list, displayed on the display unit 140 in conjunction with the voice recognition unit 127, by way of his voice. The generation of the collision between the input signals can be fed back from a corresponding App, or the control unit 160 can previously manage and classify information about the generation of a collision between input signals, from among input signals applied to a specific App.

For example, if a user makes an unwanted gesture or hand gesture while entering a next song in a process of playing back music by his voice without viewing the display unit 140, the electronic device 100 can output a notification for the unwanted gesture or hand gesture in the form of at least one of visual gradation and a voice element. That is, the electronic device 100 performs a control function so that audio information corresponding to the notification is output and received input signals are also displayed as a pop-up. Furthermore, the electronic device 100 can support a user so that the user can select any one of the input signals. In such a process, the electronic device provides the voice recognition unit 127 so that an input signal is selected or the application of a specific input signal is cancelled in response to voice spoken by a user. Here, the electronic device 100 can support the execution of the cancellation in a question and answer format for removing the input signal.

For another example, a user can perform a direct call operation while seeing a message conversation view and simultaneously fetch the voice recognition unit 127 by gripping the electronic device 100. In a situation in which a plurality of input signal collection methods is in progress at the same time as described above, the electronic device 100 may allow an input signal collection method that is most frequently used, from context generated in order to apply a specific App function in response to input signals or an input signal, to be first performed.

The input control function of the disclosure basically includes a display principle and execution principles.

The display principle provides a principle on which factors, such as an input start, a recognition state, a processing state, and processing results, are displayed on the basis of an input analysis, a target analysis, a situation analysis, and the selection of a method. For example, the electronic device 100 can provide different feedback that inform all states for user commands that are being inputted. To this end, the electronic device 100 provides a consistent feedback corresponding to each input signal collection unit in an environment in which input signal collection units of the multi-modal input unit 120 are in a mode input signal collection standby state so that a start point at which input is recognized, a recognition state, a processing state after the recognition, and a state in which the processing is terminated can be recognized. Furthermore, the electronic device 100 can support a user's immediate requirements by displaying various exception situations, for example, a sensor error that may occur while collecting input signals using input signal collection units included in the multi-modal input unit 120. Furthermore, if a spatial gesture input is recognized in a situation in which a motion input is recognized or the electronic device 100 itself is significantly moved, the electronic device 100 outputs specific state information, for example, information about "specific input signal collection impossibility".

As described above, the electronic device 100 provides the results of input signals, collected by input signal collection units included in the multi-modal input unit 120, as feedback. Here, the electronic device 100 can sequentially provide result feedback corresponding to a plurality of multi-modal input signals which are received through a specific device presently being manipulated by a user, for example, the external device 200. Furthermore, if a command is given to a target device through a specific device in an integrated environment, the electronic device 100 may display a feedback only in the target device or provide different types of feedbacks to the target device and the specific device. Here, a device in which an App, to which a specific input signal is applied, is executed may become the target device. Alternatively, a device from which a screen, to which a specific App is applied, is output may become the target device.

Furthermore, when a plurality of input signals is generated, interference can be generated between the input signals. For example, if the same App is applied to a plurality of multi-modal input signals, interference can be generated between the plurality of multi-modal input signals. In this case, the electronic device 100 provides a notification or feedback for a corresponding situation.

For example, if a voice command is executed in background in response to a wake-up command that wakes up the electronic device 100, the electronic device 100 displays an indicator informing that the voice command is being recognized, an indictor corresponding to the recognized voice command, an indicator informing that the voice command is being processed, and a result state. Furthermore, if the intensity of surrounding noise is suddenly increased while receiving voice, a problem occurs in the microphone, or if the voice of a registered user is not authenticated despite the voice recognition unit using a speaker-dependent method, the electronic device 100 can support an immediate feedback so that a user does not continue to input his voice in an error situation.

Furthermore, in a state in which a motion (e.g., snap, panning, shake, or tilt) of a user is recognized, the electronic device 100 controls an interface input that needs the fixed state of a terminal, such as an air motion, so that the interface input is invalidated. Likewise, while a movement of the electronic device 100 itself is sensed, the electronic device 100 can provide a user with information about the unavailability of input signal collection units (e.g., face recognition, an OCR, an air motion, and a hand shape) that need a static posture for a specific time.

Here, a method of providing a feedback to the user or a channel through which the feedback is provided to the user is determined by circumstantial factors including the type of input signal collection units that have provided input signals, the type of task to which a corresponding input signal will be applied or the type of external device 200, a physical state of a current electronic device 100, a predetermined basic feedback method or option information, information about surrounding environments of a user or a device, and the type of feedback that can be provided through the electronic device 100. For example, if a feedback for a state in which a user input is being recognized, such as voice, hand shape recognition, face recognition, or function support based on the access interface 170, is necessary, the electronic device 100 provides at least one of the display of an indicator for a status bar region, the display of progress information using background information, the operation of LED lighting (e.g., color and frequency) mounted on the electronic device 100, visual gradation corresponding to a multi-modal input on the display unit 140 (e.g., displays a foreground task that is being displayed on a screen in such a manner that the invasion of the foreground task into a content region is minimized), and visual gradation and a haptic effect if the user input is specific to an input type (e.g., grip or squeeze).

The electronic device 100 can provide an acoustic or haptic feedback instead of a visual gradation feedback that is directly displayed on the display unit 140, in response to an input signal from an input signal collection unit that is specific to a physical movement or an input signal that is received in a situation in which it is difficult to view a screen, for example, in a noisy situation. The electronic device 100 provides an acoustic feedback in response to an input signal that is remote without contact between a device and a user, and a result feedback corresponding to the processing of the corresponding input signal can be provided through the external device 200 or the electronic device 100 that is controlled when result information is displayed. The electronic device 100 supports an acoustic feedback so that the acoustic feedback is deactivated in response to user setting information, such as a silent mode. In a process of providing a feedback through such as a multi-channel or multi-method, the electronic device 100 can provide a setting menu so that a specific feedback can be provided in a manner that is desired by a user.

The electronic device 100 can support a process in which search results are rescanned in response to a specific motion, for example, a shake operation in a process of searching for an Access Point (AP) for a communication connection based on a Wi-Fi module. At this time, when a corresponding input signal is received, the electronic device 100 can provide a haptic or acoustic feedback having vibration of a specific size so that the time when the shake input stops can be intuitively recognized.

If a user drives a gallery function through the display unit 140 and remotely performs an input, such as an air motion for controlling entry into specific music or next music, on the external device 200 on a remote dock, the electronic device 100 can support a process in which result information for the corresponding input is displayed on the display unit 140 of the electronic device 100 as a specific pop-up (e.g., toast pop-up). In such a process, the electronic device 100 collects the air motion and transfers the collected air motion to the external device 200 in order to request a specific music file to be played back.

Furthermore, the input support function of the present invention can support the operation of a device based on at least one of time, a task, and priority, which are execution principles.

First, in the case of an operation based on time, the electronic device 100 supports the sequential execution of tasks based on a point of time at which the reception of each of a plurality of multi-modal inputs is terminated. Here, the electronic device 100 can support the sequential execution of tasks irrespective of whether a plurality of multi-modal inputs corresponds to tasks applied to different Apps or whether a plurality of multi-modal inputs corresponds to tasks applied to the same App.

In order to support single input processing based on a task, the electronic device 100 preferentially executes the function of a foreground task if an input signal received through the multi-modal input unit 120 is mapped to the function of the foreground task. If a device or a plurality of devices which recognizes a user's input in real time can measure the distance from the user, the foreground task can be the highest task that is in progress through the output module, for example, the display unit or the speaker of a corresponding device on the basis of a device that is the closest to the user, or a device on which the user's eyes and attention are focused through the user's face or pupil recognition.
If a foreground task function mapped to an input signal is not present, the electronic device 100 controls a function mapped to a background task so that the function is executed. In this case, if a plurality of background tasks is present, the electronic device 100 can perform control so that the most recently manipulated background task function is executed, a background task function having the highest frequency of access by a user is executed, or a background task function corresponding to a function having the highest frequency of use by a user is executed. Alternatively, the electronic device 100 can provide a list of all background tasks to which a function has been mapped so that a user directly selects background task. For example, an environment in which a background music playback function and a photo slide show or a video playback function, that is, background functions, are provided as N screen functions through the external device 200 can be assumed. Here, N-SCREEN is a computing and network (networking) service that can share a single content between various digital communications devices such as smart-phones, PCs, smart TVs, tablet PCs, cars, etc. As N-SCREEN allows a user to see a single content continuously regardless of time or location constraints, the user can download a movie on the computer and watch the movie from the TV and continue to watch it from the smart-phone or tablet PC while on the subway. In such an environment, when an input signal corresponding to a volume control function is collected, the electronic device 100 supports that a function corresponding to the collected input signal is applied according to any one of the aforementioned execution methods.

In relation to a foreground task function, if a task to which a function has been mapped in response to a user's input, from among a plurality of foreground tasks, is a single task, the electronic device 100 supports the function of the corresponding task being executed. Furthermore, the electronic device 100 can execute the function of the most recently manipulated foreground task, control execution in a foreground task corresponding to a function having the highest frequency of use by a user, or provide a list of all foreground tasks to which a function has been mapped so that a user can directly select a foreground task.

For example, the electronic device 100 can display both a web page and a photo album in a use environment, such as by a split window, an N screen, or a multiple window. Here, when input signals, such as the execution of (Digital Multimedia Broadcasting (DMB) and the execution of a video player App, are collected, the electronic device 100 can provide a DMB screen and a video player App screen on a web page screen as separated layers. Furthermore, in an N screen environment based on convergence, the electronic device 100 and the external device 200 can perform respective tasks or the electronic device 100 and a plurality of the external devices 200 can recognize a simultaneous user air motion as input. To this end, each of the electronic device 100 and at least one of the plurality of external devices 200 can include the multi-modal input unit 120 capable of recognizing the simultaneous user air motion. Furthermore, if only one device collects an input signal, the one device shares the input signal with other devices.

In plural input processing based on a task, if a plurality of multi-modal inputs are mapped to respective functions for different Apps, the electronic device 100 controls that the individual functions are executed in the order that command inputs are completed. For example, the electronic device 100 controls that App functions mapped to respective input signals are executed in the order of the time when an input is completed. The electronic device 100 supports the output of visual gradation by providing a list of available functions corresponding to all received user commands so that a user can manually select the available functions. In such a process, a list of functions that can be executed in response to an input signal is displayed because different functions can be executed in response to a single input due to interference between inputs. A touch, a motion, and an air motion can be variably applied to a user's input for selecting a function. The electronic device 100 processes a check procedure for a plurality of commands, received using the voice recognition unit 127, as progress voice. For example, the electronic device 100 can support the output of audio information, such as "Which one of a function A and a function B will be executed?" and "Functions A, B, and C have been received at the same time. Please speak function numbers in order of functions to be executed, and speak 'Done' if you want an end.".

For example, while outputting a photograph through a gallery App, the electronic device 100 can receive a command, instructing that a specific photograph be transmitted to a specific recipient in a message form, through voice. Alternatively, the electronic device can receive a command through a touch input that instructs entry into an edit mode. The electronic device 100 can receive an air motion signal that instructs content on a current screen to be mirrored to at least one external device 200 in a convergence environment. Here, the electronic device 100 may support a function in which an unwanted voice command, for example, an operation according to voice of another person who has not been registered with the electronic device 100, should not be performed by preferentially performing voice authentication.

As described above, in accordance with the input control method and the electronic device supporting the same according to the present invention, the present invention provides the display principle and the execution principles for multi-modal inputs, and supports the providing and execution processing of feedbacks for input signals received on the basis of the principles, which can be applied more adaptively and expansively.

In the aforementioned description, the display principle of the disclosure includes a definition for providing a proper feedback. Furthermore, the execution principle includes a definition for transferring an exact result. In a relationship between the display principle and the execution principle, a definition can be given so that a plurality of commands is processed according to an execution principle.

Furthermore, the electronic device 100 in accordance with an embodiment of the present invention can include, for example, all information communication devices, multimedia devices, and application devices therefor, such as a Portable Multimedia Player (PMP), a digital broadcasting player, a Personal Digital Assistant (PDA), a music player (e.g., an MP3 player), a portable game terminal, a smart phone, a notebook, and a handheld PC, in addition to all mobile communication terminals that operate based on communication protocols corresponding to various communication systems.

The embodiments disclosed in the present specification and drawings are illustrated to present only specific examples in order to clarify the technical contents of the disclosure and help understanding of the present invention, but are not intended to limit the scope of the invention, as defined by the accompanying claims.

## Claims

1. An input control method of an electronic device, comprising:
activating (301) a plurality of input signal collection units (121 - 129) supporting a multi-modal input;
collecting (303) at least one input signal from the input signal collection units;
outputting (305) feedback information corresponding to the at least one input signal;
determining if the at least one input signal is mapped to a function of at least one foreground task;
if the at least one input signal is mapped to a function of at least one foreground task, applying (407) the at least one input signal to the at least one foreground task; and
if the at least one input signal is not mapped to a function of at least one foreground task, applying (407) the at least one input signal to at least one background task.

2. The input control method of claim 1, wherein outputting (305) the feedback information comprises at least one of:
outputting the feedback information in an indicator form in a status bar region of the electronic device;
outputting the feedback information in a voice guide sound form;
outputting the feedback information as haptic information corresponding to vibration having a specific pattern;
implementing the feedback information based on control of a lamp; and
outputting the feedback information to at least one external device connected with the electronic device.

3. The input control method of claim 1, wherein outputting (305) the feedback information further comprises outputting (311, 313), when the input signal includes an error, an error feedback and a guide feedback for performing a specific function.

4. The input control method of claim 1, wherein outputting (305) the feedback information further comprises outputting a processing feedback corresponding to processing results of the input signal.

5. The input control method of claim 1, further comprising:
processing an application, App, function in response to the input signal; and
sequentially processing, when a plurality of input signals are received, the plurality of input signals based on a time at which a reception of each of the input signals is completed.

6. The input control method of claim 1, wherein applying (407) the specific input signal to the at least one foreground task further comprising at least one of:
if a plurality of foreground tasks is present,
applying the input signal to a foreground task that has been most recently manipulated;
applying the input signal to a foreground task having a highest frequency of user use; and
outputting a list of foreground tasks to which the input signal is to be applied.

7. The input control method of claim 1, wherein applying (407) the input signal to the at least one background task further comprising at least one of:
if a plurality of background tasks is present,
applying the input signal to a background task that has been most recently manipulated;
applying the input signal to a background task having a highest frequency of user use or a highest frequency of access; and
outputting a list of background tasks to which the input signal is to be applied.

8. The input control method of claim 1, further comprising processing an application, App, function in response to the input signal;
wherein the processing of the App function comprises applying at least one input signal to the App function according to priorities of a plurality of input signals based on priorities set to the input signal collection units or priorities assigned by a user designation when the plurality of input signals is received.

9. An electronic device (100), comprising:
a multi-modal input unit (120) configured to comprise a plurality of input signal collection units (121 - 129) supporting a multi-modal input; and
a control unit (160) configured to:
activate (301) the plurality of input signal collection units (121 - 129);
collect (303) at least one input signal from the input signal collection units;
output (305) feedback information corresponding to the at least one input signal;
determine if the at least one input signal is mapped to a function of at least one foreground task;
if the at least one input signal is mapped to a function of at least one foreground task, apply (407) the at least one input signal to the at least one foreground task; and
if the at least one input signal is not mapped to a function of at least one foreground task, apply (407) the at least one input signal to at least one background task.

10. The electronic device (100) of claim 9, further comprising at least one of:
a display unit (140) configured to output the feedback information in an indicator form in a status bar region of the electronic device (100);
a speaker configured to output the feedback information in a voice guide sound form;
a vibration unit configured to output the feedback information as haptic information corresponding to vibration having a specific pattern;
a lamp unit configured to implement the feedback information based on control of a lamp; and
an access interface configured to output the feedback information to at least one external device connected with the electronic device (100).

11. The electronic device (100) of claim 9, wherein the control unit (160) is further configured to output (311, 313), when the input signal includes an error, an error feedback and a guide feedback for performing a specific function.

12. The electronic device (100) of claim 9, wherein the control unit (160) is further configured to sequentially process, when a plurality of input signals is received, the plurality of input signals based on a time at which a reception of each of the input signals is completed.

13. The electronic device (100) of claim 9, wherein, to apply (407) the at least one input signal to the at least one foreground task, the control unit (160) is further configured to at least one of:
apply the input signal to a foreground task that has been most recently manipulated;
apply the input signal to a foreground task having a highest frequency of user use; and
output a list of foreground tasks to which the input signal is to be applied.

14. The electronic device (100) of claim 9, wherein, to apply (407) the at least one input signal to the at least one background task, the control unit (160) is further configured to at least one of:
apply the input signal to a background task that has been most recently manipulated;
apply the input signal to a background task having a highest frequency of user use or a highest frequency of access; and
output a list of background tasks to which the input signal is to be applied.

15. The electronic device (100) of claim 9, wherein the control unit (160) is further configured to apply at least one input signal to an application, App, function according to priorities of the plurality of input signals based on priorities set to the input signal collection units or priorities assigned by a user designation, when the plurality of input signals is received.

## Patentansprüche

1. Eingangssteuerverfahren einer elektronischen Vorrichtung, das Folgendes beinhaltet:
Aktivieren (301) einer Vielzahl von Eingangssignalerfassungseinheiten (121 - 129), die einen multimodalen Eingang unterstützen;
Erfassen (303) von mindestens einem Eingangssignal von den Eingangssignalerfassungseinheiten;
Ausgeben (305) von Rückmeldungsinformationen entsprechend dem mindestens einen Eingangssignal;
Bestimmen, ob das mindestens eine Eingangssignal einer Funktion von mindestens einer Vordergrundaufgabe zugeordnet ist;
falls das mindestens eine Eingangssignal einer Funktion von mindestens einer Vordergrundaufgabe zugeordnet ist, Anwenden (407) des mindestens einen Eingangssignals an der mindestens einen Vordergrundaufgabe; und
falls das mindestens eine Eingangssignal nicht einer Funktion von mindestens einer Vordergrundaufgabe zugeordnet ist, Anwenden (407) des mindestens einen Eingangssignals an mindestens einer Hintergrundaufgabe.

2. Eingangssteuerverfahren gemäß Anspruch 1, wobei das Ausgeben (305) der Rückmeldungsinformationen mindestens eines von Folgendem beinhaltet:
Ausgeben der Rückmeldungsinformationen in Anzeigerform in einer Statusleistenregion der elektronischen Vorrichtung;
Ausgeben der Rückmeldungsinformationen in Sprachführungstonform;
Ausgeben der Rückmeldungsinformationen als haptische Informationen entsprechend Vibration mit einem spezifischen Muster;
Implementieren der Rückmeldungsinformationen basierend auf Steuerung einer Lampe; und
Ausgeben der Rückmeldungsinformationen an mindestens eine externe Vorrichtung, die mit der elektronischen Vorrichtung verbunden ist.

3. Eingangssteuerverfahren gemäß Anspruch 1, wobei das Ausgeben (305) der Rückmeldungsinformationen ferner, wenn das Eingangssignal einen Fehler umfasst, das Ausgeben (311, 313) einer Fehlerrückmeldung und einer Führungsrückmeldung zum Durchführen einer spezifischen Funktion beinhaltet.

4. Eingangssteuerverfahren gemäß Anspruch 1, wobei das Ausgeben (305) der Rückmeldungsinformationen ferner das Ausgeben einer Verarbeitungsrückmeldung entsprechend den Verarbeitungsresultaten des Eingangssignals beinhaltet.

5. Eingangssteuerverfahren gemäß Anspruch 1, das ferner Folgendes beinhaltet:
Verarbeiten einer Anwendungsfunktion, App-Funktion, als Reaktion auf das Eingangssignal; und
sequenzielles Verarbeiten, wenn eine Vielzahl von Eingangssignalen empfangen wird, der Vielzahl von Eingangssignalen basierend auf einem Zeitpunkt, zu dem ein Empfang von jedem der Eingangssignale abgeschlossen ist.

6. Eingangssteuerverfahren gemäß Anspruch 1, wobei das Anwenden (407) des spezifischen Eingangssignals an der mindestens einen Vordergrundaufgabe mindestens eines von Folgendem beinhaltet:
falls eine Vielzahl von Vordergrundaufgaben vorliegt,
Anwenden des Eingangssignals an einer Vordergrundaufgabe, die zuletzt manipuliert wurde;
Anwenden des Eingangssignals an einer Vordergrundaufgabe, die eine höchste Frequenz der Benutzerverwendung aufweist; und
Ausgeben einer Liste von Vordergrundaufgaben, an denen das Eingangssignal angewendet werden soll.

7. Eingangssteuerverfahren gemäß Anspruch 1, wobei das Anwenden (407) des Eingangssignals an der mindestens einen Hintergrundaufgabe mindestens eines von Folgendem beinhaltet:
falls eine Vielzahl von Hintergrundaufgaben vorliegt,
Anwenden des Eingangssignals an einer Hintergrundaufgabe, die zuletzt manipuliert wurde;
Anwenden des Eingangssignals an einer Hintergrundaufgabe, die eine höchste Frequenz der Benutzerverwendung oder eine höchste Frequenz des Zugriffs aufweist; und
Ausgeben einer Liste von Hintergrundaufgaben, an denen das Eingangssignal angewendet werden soll.

8. Eingangssteuerverfahren gemäß Anspruch 1, das ferner das Verarbeiten einer Anwendungsfunktion, App-Funktion, als Reaktion auf das Eingangssignal beinhaltet;
wobei das Verarbeiten der App-Funktion das Anwenden mindestens eines Eingangssignals an einer App-Funktion gemäß Prioritäten einer Vielzahl von Eingangssignalen basierend auf Prioritäten, die an den Eingangssignalerfassungseinheiten eingestellt sind, oder Prioritäten, die durch eine Benutzerbezeichnung zugeteilt sind, wenn die Pluralität von Eingangssignalen empfangen wird, beinhaltet.

9. Elektronische Vorrichtung (100), die Folgendes beinhaltet:
eine multimodale Eingangseinheit (120), die konfiguriert ist, eine Vielzahl von Eingangssignalerfassungseinheiten (121 - 129) zu beinhalten, die einen multimodalen Eingang unterstützen; und
eine Steuereinheit (160) die für Folgendes konfiguriert ist:
Aktivieren (301) der Vielzahl von Eingangssignalerfassungseinheiten (121 - 129);
Erfassen (303) von mindestens einem Eingangssignal von den Eingangssignalerfassungseinheiten;
Ausgeben (305) von Rückmeldungsinformationen entsprechend dem mindestens einen Eingangssignal;
Bestimmen, ob das mindestens eine Eingangssignal einer Funktion von mindestens einer Vordergrundaufgabe zugeordnet ist;
falls das mindestens eine Eingangssignal einer Funktion von mindestens einer Vordergrundaufgabe zugeordnet ist, Anwenden (407) des mindestens einen Eingangssignals an der mindestens einen Vordergrundaufgabe; und
falls das mindestens eine Eingangssignal nicht einer Funktion von mindestens einer Vordergrundaufgabe zugeordnet ist, Anwenden (407) des mindestens einen Eingangssignals an mindestens einer Hintergrundaufgabe.

10. Elektronische Vorrichtung (100) gemäß Anspruch 9, die ferner mindestens eines von Folgendem beinhaltet:
eine Anzeigeeinheit (140), die zum Ausgeben der Rückmeldungsinformationen in Anzeigerform in einer Statusleistenregion der elektronischen Vorrichtung (100) konfiguriert ist;
einen Lautsprecher, der zum Ausgeben der Rückmeldungsinformationen in Sprachführungstonform konfiguriert ist;
eine Vibrationseinheit, die zum Ausgeben der Rückmeldungsinformationen als haptische Informationen entsprechend Vibration mit einem spezifischen Muster konfiguriert ist;
eine Lampeneinheit, die zum Implementieren der Rückmeldungsinformationen basierend auf der Steuerung einer Lampe konfiguriert ist; und
eine Zugriffsschnittstelle, die zum Ausgeben der Rückmeldungsinformationen an mindestens eine externe Vorrichtung, die mit der elektronischen Vorrichtung (100) verbunden ist, konfiguriert ist.

11. Elektronische Vorrichtung 100) gemäß Anspruch 9, wobei die Steuereinheit (160) ferner, wenn das Eingangssignal einen Fehler umfasst, zum Ausgeben (311, 313) einer Fehlerrückmeldung und einer Führungsrückmeldung zum Durchführen einer spezifischen Funktion konfiguriert ist.

12. Elektronische Vorrichtung 100) gemäß Anspruch 9, wobei die Steuereinheit (160) ferner zum sequenziellen Verarbeiten, wenn eine Vielzahl von Eingangssignalen empfangen wird, der Vielzahl von Eingangssignalen basierend auf einem Zeitpunkt, zu dem ein Empfang von jedem der Eingangssignale abgeschlossen ist, konfiguriert ist.

13. Elektronische Vorrichtung 100) gemäß Anspruch 9, wobei, um das mindestens eine Eingangssignal an der mindestens einen Vordergrundaufgabe anzulegen (407), die Steuereinheit (160) ferner für mindestens eines von Folgendem konfiguriert ist:
Anwenden des Eingangssignals an einer Vordergrundaufgabe, die zuletzt manipuliert wurde;
Anwenden des Eingangssignals an einer Vordergrundaufgabe, die eine höchste Frequenz der Benutzerverwendung aufweist; und
Ausgeben einer Liste von Vordergrundaufgaben, an denen das Eingangssignal angewendet werden soll.

14. Elektronische Vorrichtung 100) gemäß Anspruch 9, wobei, um das mindestens eine Eingangssignal an der mindestens einen Hintergrundaufgabe anzulegen (407), die Steuereinheit (160) ferner für mindestens eines von Folgendem konfiguriert ist:
Anwenden des Eingangssignals an einer Hintergrundaufgabe, die zuletzt manipuliert wurde;
Anwenden des Eingangssignals an einer Hintergrundaufgabe, die eine höchste Frequenz der Benutzerverwendung oder eine höchste Frequenz des Zugriffs aufweist; und
Ausgeben einer Liste von Hintergrundaufgaben, an denen das Eingangssignal angewendet werden soll.

15. Elektronische Vorrichtung 100) gemäß Anspruch 9, wobei die Steuereinheit (160) ferner zum Anwenden mindestens eines Eingangssignals an einer Anwendungsfunktion, App-Funktion, gemäß Prioritäten der Vielzahl von Eingangssignalen basierend auf Prioritäten, die an den Eingangssignalerfassungseinheiten eingestellt sind, oder Prioritäten, die durch eine Benutzerbezeichnung zugeteilt sind, wenn die Pluralität von Eingangssignalen empfangen wird, konfiguriert ist.

## Revendications

1. Un procédé de commande d'entrée d'un dispositif électronique, comprenant :
l'activation (301) d'une pluralité d'unités de recueil de signaux en entrée (121 - 129) prenant en charge une entrée multimodale,
le recueil (303) d'au moins un signal en entrée à partir des unités de recueil de signaux en entrée,
la production en sortie (305) d'informations de rétroaction correspondant au au moins un signal en entrée,
la détermination si le au moins un signal en entrée est apparié à une fonction d'au moins une tâche d'avant-plan,
si le au moins un signal en entrée est apparié à une fonction d'au moins une tâche d'avant-plan, l'application (407) du au moins un signal en entrée à la au moins une tâche d'avant-plan, et
si le au moins un signal en entrée n'est pas apparié à une fonction d'au moins une tâche d'avant-plan, l'application (407) du au moins un signal en entrée à au moins une tâche d'arrière-plan.

2. Le procédé de commande d'entrée selon la Revendication 1, où la production en sortie (305) des informations de rétroaction comprend au moins une opération parmi :
la production en sortie des informations de rétroaction sous la forme d'un indicateur dans une zone de barre d'état du dispositif électronique,
la production en sortie des informations de rétroaction sous une forme sonore de guidage vocal,
la production en sortie des informations de rétroaction sous la forme d'informations haptiques correspondant à une vibration possédant un motif spécifique,
la mise en oeuvre des informations de rétroaction en fonction de la commande d'une lampe, et
la production en sortie des informations de rétroaction vers au moins un dispositif externe raccordé au dispositif électronique.

3. Le procédé de commande d'entrée selon la Revendication 1, où la production en sortie (305) des informations de rétroaction comprend en outre la production en sortie (311, 313), lorsque le signal en entrée comprend une erreur, d'une rétroaction d'erreur et d'une rétroaction de guidage destinées à l'exécution d'une fonction spécifique.

4. Le procédé de commande d'entrée selon la Revendication 1, où la production en sortie (305) des informations de rétroaction comprend en outre la production en sortie d'une rétroaction de traitement correspondant à des résultats de traitement du signal en entrée.

5. Le procédé de commande d'entrée selon la Revendication 1, comprenant en outre :
le traitement d'une fonction d'application, App, en réponse au signal en entrée, et
le traitement séquentiel, lorsqu'une pluralité de signaux en entrée sont reçus, de la pluralité de signaux en entrée en fonction d'une heure à laquelle une réception de chacun des signaux en entrée est achevée.

6. Le procédé de commande d'entrée selon la Revendication 1, où l'application (407) du signal en entrée spécifique à la au moins une tâche d'avant-plan comprend en outre au moins une opération parmi :
si une pluralité de tâches d'avant-plan sont présentes,
l'application du signal en entrée à une tâche d'avant-plan qui a été manipulée le plus récemment,
l'application du signal en entrée à une tâche d'avant-plan possédant une fréquence la plus élevée d'utilisation par l'utilisateur, et
la production en sortie d'une liste de tâches d'avant-plan auxquelles le signal en entrée doit être appliqué.

7. Le procédé de commande d'entrée selon la Revendication 1, où l'application (407) du signal en entrée à la au moins une tâche d'arrière-plan comprend en outre au moins une opération parmi :
si une pluralité de tâches d'arrière-plan sont présentes,
l'application du signal en entrée à une tâche d'arrière-plan qui a été manipulée le plus récemment,
l'application du signal en entrée à une tâche d'arrière-plan possédant une fréquence la plus élevée d'utilisation par l'utilisateur ou une fréquence la plus élevée d'accès, et
la production en sortie d'une liste de tâches d'arrière-plan auxquelles le signal en entrée doit être appliqué.

8. Le procédé de commande d'entrée selon la Revendication 1, comprenant en outre le traitement d'une fonction d'application, App, en réponse au signal en entrée,
où le traitement de la fonction App comprend l'application d'au moins un signal en entrée à la fonction App en fonction de priorités d'une pluralité de signaux en entrée basées sur des priorités définies pour les unités de recueil de signaux en entrée ou des priorités affectées par une désignation d'utilisateur lorsque la pluralité de signaux en entrée sont reçus.

9. Un dispositif électronique (100), comprenant :
une unité d'entrée multimodale (120) configurée de façon à comprendre une pluralité d'unités de recueil de signaux en entrée (121 - 129) prenant en charge une entrée multimodale, et
une unité de commande (160) configurée de façon à :
activer (301) la pluralité d'unités de recueil de signaux en entrée (121 - 129),
recueillir (303) au moins un signal en entrée à partir des unités de recueil de signaux en entrée,
produire en sortie (305) des informations de rétroaction correspondant au au moins un signal en entrée,
déterminer si le au moins un signal en entrée est apparié à une fonction d'au moins une tâche d'avant-plan,
si le au moins un signal en entrée est apparié à une fonction d'au moins une tâche d'avant-plan, appliquer (407) le au moins un signal en entrée à la au moins une tâche d'avant-plan, et
si le au moins un signal en entrée n'est pas apparié à une fonction d'au moins une tâche d'avant-plan, appliquer (407) le au moins un signal en entrée à au moins une tâche d'arrière-plan.

10. Le dispositif électronique (100) selon la Revendication 9, comprenant en outre au moins un élément parmi :
une unité d'affichage (140) configurée de façon à produire en sortie les informations de rétroaction sous la forme d'un indicateur dans une zone de barre d'état du dispositif électronique (100),
un haut-parleur configuré de façon à produire en sortie les informations de rétroaction sous une forme sonore de guidage vocal,
une unité de vibration configurée de façon à produire en sortie les informations de rétroaction sous la forme d'informations haptiques correspondant à une vibration possédant une motif spécifique,
une unité lampe configurée de façon à mettre en oeuvre les informations de rétroaction en fonction de la commande d'une lampe, et
une interface d'accès configurée de façon à produire en sortie les informations de rétroaction vers au moins un dispositif externe raccordé au dispositif électronique (100).

11. Le dispositif électronique (100) selon la Revendication 9, où l'unité de commande (160) est configurée en outre de façon à produire en sortie (311, 313), lorsque le signal en entrée comprend une erreur, une rétroaction d'erreur et une rétroaction de guidage destinées à l'exécution d'une fonction spécifique.

12. Le dispositif électronique (100) selon la Revendication 9, où l'unité de commande (160) est configurée en outre de façon à traiter de manière séquentielle, lorsqu'une pluralité de signaux en entrée sont reçus, la pluralité de signaux en entrée en fonction d'une heure à laquelle une réception de chacun des signaux en entrée est achevée.

13. Le dispositif électronique (100) selon la Revendication 9, où, de façon à appliquer (407) le au moins un signal en entrée à la au moins une tâche d'avant-plan, l'unité de commande (160) est configurée en outre de façon à exécuter au moins une opération parmi :
l'application du signal en entrée à une tâche d'avant-plan qui a été manipulée le plus récemment,
l'application du signal en entrée à une tâche d'avant-plan possédant une fréquence la plus élevée d'utilisation par l'utilisateur, et
la production en sortie d'une liste de tâches d'avant-plan auxquelles le signal en entrée doit être appliqué.

14. Le dispositif électronique (100) selon la Revendication 9, où, de façon à appliquer (407) le au moins un signal en entrée à la au moins une tâche d'arrière-plan, l'unité de commande (160) est configurée en outre de façon à exécuter au moins une opération parmi :
l'application du signal en entrée à une tâche d'arrière-plan qui a été manipulée le plus récemment,
l'application du signal en entrée à une tâche d'arrière-plan possédant une fréquence la plus élevée d'utilisation par l'utilisateur ou une fréquence la plus élevée d'accès, et
la production en sortie d'une liste de tâches d'arrière-plan auxquelles le signal en entrée doit être appliqué.

15. Le dispositif électronique (100) selon la Revendication 9, où l'unité de commande (160) est configurée en outre de façon à appliquer au moins un signal en entrée à une fonction d'application, App, en fonction de priorités de la pluralité de signaux en entrée basées sur des priorités définies pour les unités de recueil de signaux en entrée ou des priorités affectées par une désignation d'utilisateur lorsque la pluralité de signaux en entrée sont reçus.
